# EUROPEAN PATENT SPECIFICATION

(11) **EP 3 505 386 B1**
(45) Date of publication and mention of the grant of the patent: **10.03.2021**
(21) Application number: 17860350.2
(22) Date of filing: 05.09.2017
(51) Int. Cl.: B60L 50/61, B60L 58/13, B60L 50/60

(54) **POWER FOLLOWER FOR ELECTRIC VEHICLE, AND CONTROL APPARATUS AND METHOD FOR POWER BATTERY**
STROMFOLGER FÜR EIN ELEKTROFAHRZEUG UND STEUERUNGSVORRICHTUNG UND VERFAHREN FÜR EINEN LEISTUNGSAKKU
SUIVEUR DE PUISSANCE POUR VÉHICULE ÉLECTRIQUE, ET APPAREIL ET PROCÉDÉ DE COMMANDE POUR BATTERIE D'ALIMENTATION

(30) Priority: 11.10.2016 CN 201610887401
(43) Date of publication of application: 03.07.2019
(73) Proprietor: Zhejiang Geely New Energy Commercial Vehicles Co., Ltd., Hangzhou, Zhejiang 310051 (CN); Zhejiang Geely Holding Group Co., Ltd., Zhejiang 310051 (CN)
(72) Inventor: XU, Xiuhua, Taizhou Zhejiang 317000 (CN); CAI, Wenyuan, Taizhou Zhejiang 317000 (CN); TONG, Guoqing, Taizhou Zhejiang 317000 (CN); WANG, Yirong, Taizhou Zhejiang 317000 (CN); CHEN, Dingbang, Taizhou Zhejiang 317000 (CN)
(74) Representative: Ziebig & Hengelhaupt Patent- und Rechtsanwaltskanzlei PartG mbB
(86) International application number: PCT/CN2017/100514
(87) International publication number: WO 2018/068595

(56) References cited:
- CN-A- 1 647 966
- CN-A- 103 419 675
- CN-A- 104 163 114
- CN-A- 106 347 145
- CN-A- 106 347 358
- CN-A- 106 541 940
- CN-U- 206 436 841
- DE-A1-102016 102 930
- JP-A- 2011 015 580
- US-A1- 2011 166 733
- US-A1- 2013 166 125
- US-A1- 2015 191 164

## Description

### Technical Field

The present invention relates to the technical field of electric vehicles, in particular to a control apparatus and method for a power follower and a power battery for an electric vehicle.

### Background of the Invention

DE 10 2016 102 930 A1, US 2013/0166125 A1 and US 2011/0166733 A1 disclose different types of hybrid vehicles.

At present, as the requirements for fuel consumption and emissions of vehicles become more and more strict, an extended-range electric vehicle for reducing the fuel consumption of vehicle and reducing the emissions of vehicle has appeared on the market. For such extended-range electric vehicles, the energy supply is based on a power battery, and the power battery required is large in capacity and heavy in weight. The power follower serves as an auxiliary energy source, and when the remaining electric quantity (soc) ("soc" described herein is an abbreviation of "State of Charge", indicating the state of charge, that is, the state of battery power) of the power battery is less than a certain value, the power follower charges the power battery. The engine in the power follower operates efficiently at one or several fixed speed points, the power follower charges the power battery, and the battery outputs power to the traction motor to drive the vehicle. The power follower charges the power battery and the battery discharges to the traction motor, both of which will lose a certain amount of energy, and the frequent use of the power battery results in a reduced service life. The control strategy for the power follower and the power battery in the prior art has the problem of high fuel consumption and poor energy-saving performance.

US 2015/0191164 A1 describes a vehicle that has electrical motor generators and an internal combustion motor. A user can make a choice via a switch, whether use of the internal combustion motor shall be allowed or not.

### Summary of the Invention

An object of the present invention is to provide a control apparatus for a power follower and a power battery for an electric vehicle, to solve the problem of high-power consumption and poor energy-saving performance of the power follower and the power battery control strategy in the prior art.

In particular, the present invention provides a control apparatus and method for a power follower and a power battery for an electric vehicle, the control apparatus comprising:
a power battery used to output electric power to drive a traction motor of the electric vehicle;
a power follower used to output electric power to drive the traction motor and/or charge the power battery;
a controller used to control the driving modes of the power battery and the power follower, wherein the controller is configured to: select, when the remaining electric quantity of the power battery is not greater than a first predetermined value, a second driving mode until the remaining electric quantity of the power battery rises to a second predetermined value; select, when the remaining electric quantity of the power battery is not less than the second predetermined value, a first driving mode until the remaining electric quantity of the power battery is not greater than the first predetermined value; and alternately switch between the first driving mode and the second driving mode, the second predetermined value being greater than the first predetermined value; and
an activation apparatus used to manually control the numerical value of second predetermined value according to the requirement of a driver,
wherein the first driving mode is that the power battery operates alone to output electric power to drive the traction motor; and the second driving mode is that the power follower operates alone to output electric power to drive the traction motor and to charge the power battery.

Further, the power follower comprises an engine and an electric generator.

Further, the activation apparatus is disposed at a position in a vehicle center console, which position is convenient for the operation of a driver.

Further, the activation apparatus comprises an inactive state and an active state, wherein, in the inactive state, the second predetermined value is an electric quantity when the power battery is substantially in a fully charged state; and in the active state, the second predetermined value is obtained by manual control according to the requirement of a driver.

Further, in the inactive state, the second predetermined value is 82-100%.

Further, in the active state, the second predetermined value is 25-82%.

Further, the first predetermined value is 18-24%.

Further, the driving mode further comprises a third driving mode in which the power battery and the power follower simultaneously output electric power to drive the traction motor;
wherein the controller is configured to: select the third driving mode when the first driving mode or the second driving mode fails to meet the instantaneous power demand of the electric vehicle, and correspondingly return to the original first driving mode or second driving mode when the instantaneous power demand of the electric vehicle falls back.

In particular, the present invention further provides a control method for a power follower and a power battery for an electric vehicle, the control method comprising the following steps:
outputting electric power to drive a traction motor of the electric vehicle by using a power battery;
outputting electric power to drive the traction motor of the electric vehicle and/or charge the power battery by using a power follower;
controlling the driving mode of the power battery and the power follower by means of a controller, wherein the controller is configured to: select, when the remaining electric quantity of the power battery is not greater than a first predetermined value, a second driving mode until the remaining electric quantity of the power battery rises to a second predetermined value; select, when the remaining electric quantity of the power battery is not less than the second predetermined value, a first driving mode until the remaining electric quantity of the power battery is not greater than the first predetermined value; and alternately switch between the first driving mode and the second driving mode, the second predetermined value being greater than the first predetermined value; and wherein the first driving mode is that the power battery operates alone to output electric power to drive the traction motor; and the second driving mode is that the power follower operates alone to output electric power to drive the traction motor and to charge the power battery; and
manually controlling the numerical value of the second predetermined value by means of an activation apparatus according to the requirement of a driver to control the quantity of charge of the power battery.

Further, the driving mode further comprises a third driving mode in which the power battery and the power follower simultaneously output electric power to drive the traction motor;
wherein the controller is configured to: select the third driving mode when the first driving mode or the second driving mode fails to meet the instantaneous power demand of the electric vehicle, and correspondingly return to the original first driving mode or second driving mode when the instantaneous power demand of the electric vehicle falls back.

As to the control apparatus for a power follower and a power battery for an electric vehicle provided in the present invention, the power follower and the power battery are used as two energy output sources to provide power for the electric vehicle, the power battery is used as the main energy output source, the controller is used to realize the switching between different driving modes between the two energy output sources, i.e., the power follower and the power battery, and the activation apparatus is used to manually control the numerical value of the second predetermined value according to the requirement of a driver to control the quantity of charge of the power battery, thereby reducing the fuel consumption and improving the energy-saving performance.

As to the control apparatus for a power follower and a power battery for an electric vehicle provided in the present invention, various predetermined values are provided to define the range of the electric quantity of charge and discharge of the power battery, so that the state of charge of the power battery is maintained within a prescribed range to prevent the state of charge of the battery state from being too high or too low so as to prolong the battery life.

According to the detailed description of specific embodiments of the present invention below in conjunction with the accompanying drawings, the above and other purposes, advantages and features will become more apparent for a person skilled in the art.

### Brief Description of the Drawings

Some specific embodiments of the present invention will be described below in detail with reference to the accompanying drawings by way of example but not by way of limitation. The same reference signs indicate the same or similar components or parts in the accompanying drawings. It is understood by a person skilled in the art that the drawings are not drawn to scale necessarily. In the accompanying drawings:
Fig. 1 is a general structural block diagram of a control apparatus for a power follower and a power battery for an electric vehicle according to one embodiment of the present invention;
Fig. 2 is a schematic diagram of a control strategy for switching between different driving modes of the control apparatus for a power follower and a power battery for an electric vehicle according to one embodiment of the present invention;
Fig. 3 is a schematic diagram of a control flow for switching between different driving modes of the control apparatus for a power follower and a power battery for an electric vehicle according to one embodiment of the present invention; and
Fig. 4 is a schematic diagram of a control flow for a driver of a control apparatus requesting a quantitative charging mode according to the requirement according to one embodiment of the present invention.

### Detailed Description of the Invention

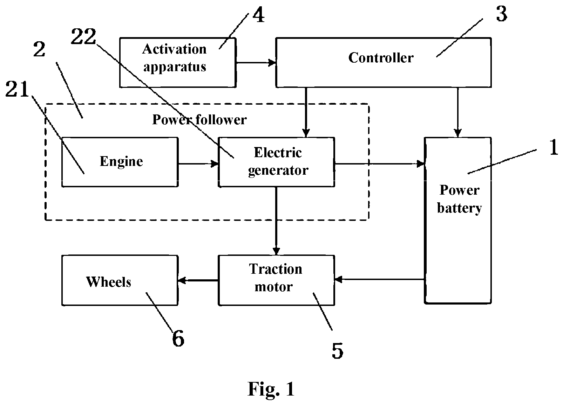

Fig. 1 is a general structural block diagram of a power follower for an electric vehicle and a control apparatus for a power battery according to one embodiment of the present invention. As shown in Fig. 1, a control apparatus for a power follower and a power battery for an electric vehicle may comprises a power battery 1, a power follower 2, a controller 3 and an activation apparatus 4. The power battery 1 is used to output electric power to drive a traction motor 5 of the electric vehicle and further drive the rotation of wheels 6 of the electric vehicle. The power follower 2 comprises an engine 21 and an electric generator 22 used to output electric power to drive the traction motor 5 and/or charge the power battery 1. The engine 21 is connected to the electric generator 22 so that the engine 21, when in operation, drives the rotation of the electric generator 22 to generate electric power, and the engine 21 may use gasoline, diesel, natural gas and the other energy sources. The electric generator 22 is connected to the power battery 1 to charge the power battery, and the electric generator 22 is connected to the traction motor 5 to output electric power to cause the traction motor 5 to rotate. The controller 3 is electrically connected to the power follower 2 and the power battery for controlling the driving modes of the power battery 1 and the power follower 2; and multiple driving modes are provided, and the controller 3 controls the power battery 1 and the power follower 2 to select one mode to operate from the multiple driving modes. The multiple driving modes comprise a first driving mode and a second driving mode, wherein the first driving mode is that the power battery 1 operates alone to output electric power to drive the traction motor 5; and the second driving mode is that the power follower 2 operates alone to output electric power to drive the traction motor 5 and charge the power battery 1. The controller 3 is configured to: select, when the remaining electric quantity of the power battery is not greater than a first predetermined value, a second driving mode until the remaining electric quantity of the power battery 1 rises to a second predetermined value; select, when the remaining electric quantity of the power battery 1 is not less than the second predetermined value, a first driving mode until the remaining electric quantity of the power battery 1 is not greater than the first predetermined value; and alternately switch between the first driving mode and the second driving mode, the second predetermined value being greater than the first predetermined value. The activation apparatus 4 is electrically connected to the controller 3 for manually controlling the numerical value of the second predetermined value according to the requirement of a driver so as to control the quantity of charge of the power battery 1.

Specifically, in the first driving mode, the power battery 1 operates alone to output electric power to drive the traction motor 5, and at this time, the power follower 2 is in a stop state. In the second driving mode, the power follower 2 operates alone to output electric power to drive the traction motor 5 while simultaneously charging the power battery 1. At this time, the power battery 1 is only in a charging state, and the power battery 1 does not output power, so that the power battery 1 can be charged as quickly as possible. In a particular embodiment, the activation apparatus 4 is disposed at a position in a vehicle center console, which position is convenient for the operation of a driver, for example, can be disposed on a shift lever for ease of operation. More specifically, the activation apparatus 4 may be a button or a switch with a rotary scale so as to control it to be in an active state or an inactive state. In the inactive state, the second predetermined value is set to be an electric quantity when the power battery 1 is substantially in a fully charged state, and at this time, when the controller controls the power battery 1 and the power follower 2 to operate in the second driving mode, the power battery 1 can be charged from the remaining electric quantity (soc) to a substantially fully charged state, and then the power battery 1 and the power follower 2 operates in the first driving mode again until the soc is not greater than the first predetermined value. When the activation apparatus 4 is in an active state, that is, when the driver presses or opens the activation apparatus 4 as needed, the second predetermined value is set to the numerical value selected by the driver, and at this time, when the controller controls the power battery 1 and the power follower 2 to operate in the second driving mode, the power battery 1 is shallowly charged according to the real-time requirements of the driver only by charging the power battery 1 from the remaining electric quantity (soc) to the numerical value of the second predetermined value selected by the driver, that is, by controlling the power battery 1 and the power follower 2 to operate in the first driving mode. The percentage of charge to the power battery depends on the real-time requirements of the driver and the numerical value of the second predetermined value set by the driver. For example, in a specific embodiment, when the driver has a self-charging requirement, if it is determined that the plug-in charging can be performed after half an hour, the activation apparatus 4 can control the switch from the automatic full charging state to the quantitative shallow charging state of the battery, so that the quantity of charge is just enough to satisfy the power consumption for the next half hour to reduce the fuel consumption of the engine 21 and improve the energy-saving performance.

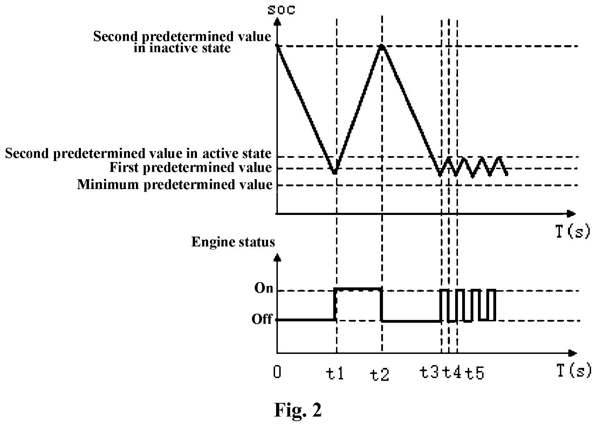

Fig. 2 is a schematic diagram of a control strategy for switching between different driving modes of the control apparatus for a power follower and a power battery for an electric vehicle according to one embodiment of the present invention. As shown in Fig. 2, when T = 0, the electric quantity of the power battery 1 is at the maximum value (max), and during the time 0 to t1, the driving mode is the first driving mode, and the electric quantity of the power battery 1 is gradually reduced to the first predetermined value. When T = t1, the electric quantity of the power battery 1 is at a first predetermined value, and the engine 21 is in a state for starting up, and when the electric quantity of the power battery 1 is less than the first predetermined value, the driving mode is switched to the second driving mode, and at this time, the power battery 1 stops operation, the engine 21 starts to operate and drive the electric generator 22 to generate power so as to simultaneously output electric power to drive the traction motor 5 and charge the power battery 1. At this time, if the activation apparatus is in an inactive state, during the time t1 to t2 as shown in the figure, the second predetermined value is substantially equal to the maximum value (max), and the power battery 1 can be substantially charged in the second driving mode to the fully charged state. During the time t2 to t3, after the power battery 1 is charged to the fully charged state, the controller 3 controls the switch to the first driving mode, and the operating state during the time 0 to t1 is repeated. When T = t3, the activation apparatus is in an active state, and at this time, the second predetermined value in the active state is the numerical value set by the driver according to the real-time requirements, and during the time t3 to t4, in the second driving mode, the power battery 1 is charged to the second predetermined value in the active state, and then the charging is stopped and meanwhile it is switched to the first driving mode. During the time t4 to t5, in the first driving mode, the power battery 1 operates alone to drive the rotation of the traction motor 5, and alternately switches between the first driving mode and the second driving mode, so that the power battery 1 is in a shallowly charged state.

In a preferred embodiment, the first predetermined value is any percentage value within 18-24%. When the activation apparatus 4 is in the inactive state, the second predetermined value is any percentage value within 82-100%. When the activation apparatus 4 is in the active state, the second predetermined value is any percentage value within 25-82%. The present invention further sets the minimum electric quantity (min) of the power battery 1 to be any percentage value within 15-18%. During charging and discharging of the power battery 1, the range of the electric quantity of charge and discharge of the power battery 1 is defined, so that the state of charge can always be within a prescribed range so as to prevent the state of charge of the battery from being too high or too low to prolong the battery life.

Further, The driving mode of the control apparatus of the present invention further comprises a third driving mode, and the power battery 1 and the power follower 2 simultaneously output electric power to drive the traction motor 5, wherein the controller 3 is configured to: select the third driving mode when the first driving mode or the second driving mode fails to meet the instantaneous power demand of the electric vehicle, and correspondingly return to the original first driving mode or second driving mode when the instantaneous power demand of the electric vehicle falls back. For example, during the driving of the vehicle, some special conditions, such as climbing a long ramp and/or sudden acceleration, may not be avoided. At this time, the power demand of the entire vehicle cannot be satisfied when the driving mode is the first driving mode or the second driving mode, and the controller controls the power battery 1 and the power follower 2 to operate in the third driving mode, so that the power battery 1 and the power follower 2 operate simultaneously to provide electric power to drive the traction motor 5. Also, after a special condition, such as climbing a long ramp and/or a sudden acceleration disappears, when the instantaneous power demand of the electric vehicle can be satisfied in the first driving mode or the second driving mode, the controller 3 correspondingly controls the power battery 1 and the power follower 2 to return to the original first driving mode or second driving mode before the special condition.

As to the control apparatus for a power follower and a power battery for an electric vehicle provided in the present invention, the power follower 2 and the power battery 1 are used as two energy output sources to provide power for the electric vehicle, the power battery 1 is used as the main energy output source, the controller 3 is used to realize the switching between different driving modes between the two energy output sources, i.e., the power follower 2 and the power battery 1, and the activation apparatus 4 is used to manually control the numerical value of the second predetermined value according to the requirement of a driver to control the quantity of charge of the power battery 1, thereby reducing the fuel consumption and improving the energy-saving performance.

As to the control apparatus for a power follower and a power battery for an electric vehicle provided in the present invention, various predetermined values are provided to define the range of the electric quantity of charge and discharge of the power battery 1, so that the state of charge of the power battery is maintained within a prescribed range to prevent the state of charge of the battery state from being too high or too low so as to prolong the battery life.

The present invention further provides a control method for a power follower and a power battery for an electric vehicle, the control method comprising the following steps:
outputting electric power to drive a traction motor 5 of the electric vehicle by using a power battery 1;
outputting electric power to drive the traction motor 5 of the electric vehicle and/or charge the power battery 1 by using a power follower 2;
controlling the driving mode of the power battery 1 and the power follower 2 by means of a controller 3, wherein the controller 3 is configured to: select, when the remaining electric quantity of the power battery 1 is not greater than a first predetermined value, a second driving mode until the remaining electric quantity of the power battery 1 rises to a second predetermined value; select, when the remaining electric quantity of the power battery 1 is not less than the second predetermined value, a first driving mode until the remaining electric quantity of the power battery 1 is not greater than the first predetermined value; and alternately switch between the first driving mode and the second driving mode, the second predetermined value being greater than the first predetermined value; and wherein the first driving mode is that the power battery 1 operates alone to output electric power to drive the traction motor 5; and the second driving mode is that the power follower 2 operates alone to output electric power to drive the traction motor 5 and charge the power battery 1; and
the numerical value of the second predetermined value is manually controlled by means of an activation apparatus 4 according to the requirement of a driver to control the quantity of charge of the power battery 1.
Further, the driving mode further comprises a third driving mode in which the power battery and the power follower simultaneously output electric power to drive the traction motor;
wherein the controller 3 is configured to: select the third driving mode when the first driving mode or the second driving mode fails to meet the instantaneous power demand of the electric vehicle, and correspondingly return to the original first driving mode or second driving mode when the instantaneous power demand of the electric vehicle falls back.

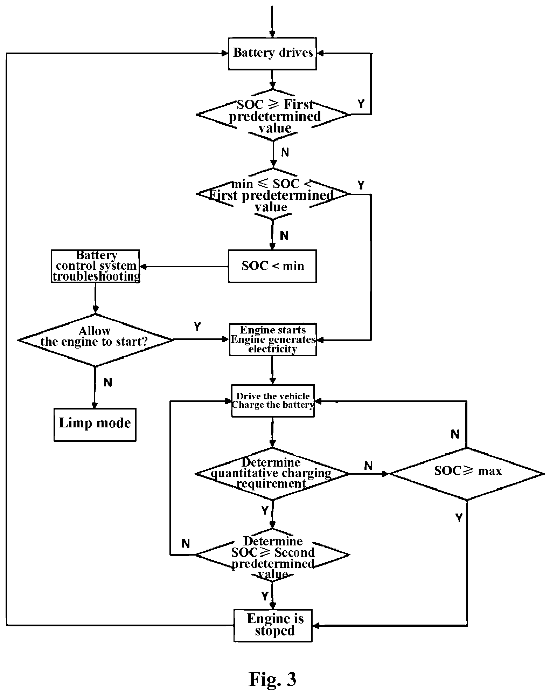

Fig. 3 is a schematic diagram of a control flow for switching between different driving modes of the control apparatus for a power follower and a power battery for an electric vehicle according to one embodiment of the present invention. As shown in Fig. 3, a power battery 1 is used to output electric power to drive a traction motor 5 of the electric vehicle; and a power follower 2 is used to output electric power to drive the traction motor 5 of the electric vehicle and/or charge the power battery 1. The following steps are comprised:
Step 1: the vehicle is driven by the power battery 1.
Step 2: when the electric quantity of the power battery 1 drops to a first predetermined value (the first predetermined value > the minimum value (min) set by the soc, to avoid damage to the battery caused by excessive discharge), the engine is started for power supply, and the power supplying from the battery is stopped. At this time: <1> if the driver does not need to charge the battery, that is, the activation apparatus 4 is not activated, the battery is automatically controlled to be charged to the second predetermined value in the active state (which is substantially equal to the maximum value (max) set by the soc), and step 3 is executed next. <2> If the driver has a self-charging requirement, that is, the activation apparatus 4 is activated, for example, it is determined that the plug-in charging can be performed after half an hour, the activation apparatus 4 designed on a shift lever can be used to switch from the automatic full charging state to the quantitative shallow charging state of the battery, and step 4 is executed next. At the same time, this function should be informed in the operating instruction manual of the vehicle.
Step 3: when the SOC ≥ the maximum value (max), the engine 21 is stopped, and step 1 is repeated.
Step 4: when the SOC ≥ the second predetermined value, the engine 21 is stopped, and step 1 is repeated.

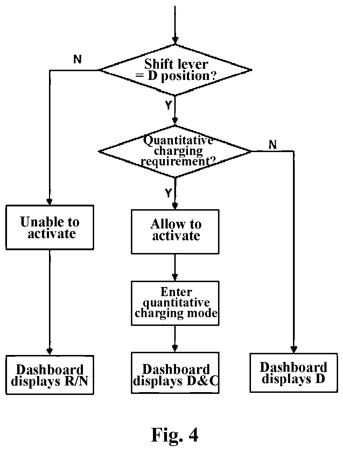

Fig. 4 is a schematic diagram of a control flow for a driver of a control apparatus requesting a quantitative charging mode according to the requirement according to one embodiment of the present invention. As shown in Fig. 4, the activation apparatus 4 is integrated at the shift lever of the vehicle. In a specific embodiment, the activation apparatus 4 is an activation button C, which represents Charging, and can realize the quantitative charging of the battery. The activation button C has only two modes, ON/OFF, which respectively indicate being activated and inactivated, and is pressed to be ON and lifted to be OFF. Preferably, the dashboard can also display the current status, such as gear position, whether it is charged, the charging percentage and other information. As shown in Fig. 4, only when the position of the shift lever is in the D position (forward gear), the driver is allowed to activate the button, and at the same time the dashboard displays that the current status is D position and quantitative charging C is carried out; if the button is not activated, the dashboard only displays running in the D position; otherwise, the dashboard displays a non-D position (that is, R/N gear position, i.e., reverse gear or neutral position). At the same time, this function should be informed in the operating instruction manual of the vehicle.

So far, it is recognized by a person skilled in the art that although multiple exemplary embodiments of the present invention have been shown and described in detail herein, many other variations or modifications complying with the principles of the present invention can be directly determined or derived from the contents disclosed in the present invention.

## Claims

1. A control apparatus for a power follower (2) and a power battery (1) for an electric vehicle, the control apparatus comprising:
a power battery (1) used to output electric power to drive a traction motor (5) of the electric vehicle;
a power follower (2) used to output electric power to drive the traction motor (5) and/or charge the power battery (1);
a controller (3) used to control the driving modes of the power battery (1) and the power follower (2), wherein the controller (3) is configured to: select, when the remaining electric quantity (soc) of the power battery (1) is not greater than a first predetermined value, a second driving mode until the remaining electric quantity (soc) of the power battery (1) rises to a second predetermined value; select, when the remaining electric quantity (soc) of the power battery is not less than the second predetermined value, a first driving mode until the remaining electric quantity (soc) of the power battery (1) is not greater than the first predetermined value; and alternately switch between the first driving mode and the second driving mode, the second predetermined value being greater than the first predetermined value; and
an activation apparatus (4) used to manually control the numerical value of the second predetermined value according to the requirement of a driver;
wherein the first driving mode is that the power battery (1) operates alone to output electric power to drive the traction motor (5); and the second driving mode is that the power follower (2) operates alone to output electric power to drive the traction motor (5) and to charge the power battery (1).

2. The control apparatus according to claim 1, wherein the power follower (2) comprises an engine (21) and an electric generator (22).

3. The control apparatus according to claim 1, wherein the activation apparatus (4) is disposed at a position in a vehicle center console, which position is convenient for the operation of a driver.

4. The control apparatus according to any one of claims 1 to 3, wherein the activation apparatus (4) comprises an inactive state and an active state; and wherein, in the inactive state, the second predetermined value is an electric quantity when the power battery is in a fully charged state; and in the active state, the second predetermined value is obtained by manual control according to the requirement of a driver.

5. The control apparatus according to claim 4, wherein, in the inactive state, the second predetermined value is 82-100%.

6. The control apparatus according to claim 4, wherein, in the active state, the second predetermined value is 25-82%.

7. The control apparatus according to claim 1, wherein the first predetermined value is 18-24%.

8. The control apparatus according to claim 1, wherein the driving mode further comprises a third driving mode in which the power battery (1) and the power follower (2) simultaneously output electric power to drive the traction motor (5);
wherein the controller (3) is configured to: select the third driving mode when the first driving mode or the second driving mode fails to meet the instantaneous power demand of the electric vehicle, and correspondingly return to the original first driving mode or second driving mode when the instantaneous power demand of the electric vehicle falls back.

9. A control method for a power follower (2) and a power battery (1) for an electric vehicle, the control method comprising the following steps:
outputting electric power to drive a traction motor (5) of the electric vehicle by using a power battery (1);
outputting electric power to drive the traction motor (5) of the electric vehicle and/or charge the power battery (1) by using a power follower (2);
controlling the driving modes of the power battery (1) and the power follower (2) by means of a controller (3), wherein the controller (3) is configured to: select, when the remaining electric quantity (soc) of the power battery (1) is not greater than a first predetermined value, a second driving mode until the remaining electric quantity (soc) of the power battery (1) rises to a second predetermined value; select, when the remaining electric quantity (soc) of the power battery (1) is not less than the second predetermined value, a first driving mode until the remaining electric quantity (soc) of the power battery (1) is not greater than the first predetermined value; and alternately switch between the first driving mode and the second driving mode, the second predetermined value being greater than the first predetermined value; and wherein the first driving mode is that the power battery (1) operates alone to output electric power to drive the traction motor (5); and the second driving mode is that the power follower (2) operates alone to output electric power to drive the traction motor (5) and to charge the power battery (1); and
manually controlling the numerical value of the second predetermined value by means of an activation apparatus (4) according to the requirement of a driver to control the quantity of charge of the power battery (1).

10. The control method according to claim 9, wherein the driving mode further comprises a third driving mode in which the power battery (1) and the power follower (2) simultaneously output electric power to drive the traction motor (5);
wherein the controller (3) is configured to: select the third driving mode when the first driving mode or the second driving mode fails to meet the instantaneous power demand of the electric vehicle, and correspondingly return to the original first driving mode or second driving mode when the instantaneous power demand of the electric vehicle falls back.

## Patentansprüche

1. Steuerungsvorrichtung für einen Stromfolger (2) und einen Leistungsakku (1) für ein Elektrofahrzeug, wobei die Steuerungsvorrichtung Folgendes umfasst:
einen Leistungsakku (1), der dazu verwendet wird, elektrische Leistung zum Antreiben eines Fahrmotors (5) des Elektrofahrzeugs auszugeben;
einen Stromfolger (2), der dazu verwendet wird, elektrische Leistung zum Antreiben des Fahrmotors (5) auszugeben und/oder den Leistungsakku (1) zu laden;
eine Steuerung (3), die dazu verwendet wird, die Fahrmodi des Leistungsakkus (1) und des Stromfolgers (2) zu steuern, wobei die Steuerung (3) konfiguriert ist, um: wenn die verbleibende elektrische Menge (soc, *state of charge)* des Leistungsakkus (1) nicht größer als ein erster vorbestimmter Wert ist, einen zweiten Fahrmodus auszuwählen, bis die verbleibende elektrische Menge (soc) des Leistungsakkus (1) auf einen zweiten vorbestimmten Wert ansteigt; wenn die verbleibende elektrische Menge (soc) des Leistungsakkus nicht kleiner als der zweite vorbestimmte Wert ist, einen ersten Fahrmodus auszuwählen, bis die verbleibende elektrische Menge (soc) des Leistungsakkus (1) nicht größer als der erste vorbestimmte Wert ist; und abwechselnd zwischen dem ersten Fahrmodus und dem zweiten Fahrmodus hin- und herzuschalten, wobei der zweite vorbestimmte Wert größer als der erste vorbestimmte Wert ist; und
ein Aktivierungsgerät (4), das dazu dient, den numerischen Wert des zweiten vorbestimmten Werts gemäß den Anforderungen eines Fahrers manuell zu steuern;
wobei der erste Fahrmodus darin besteht, dass der Leistungsakku (1) allein arbeitet, um elektrische Leistung zum Antreiben des Fahrmotors (5) auszugeben; und der zweite Fahrmodus darin besteht, dass der Stromfolger (2) allein arbeitet, um elektrische Leistung zum Antreiben des Fahrmotors (5) und Laden des Leistungsakkus (1) auszugeben.

2. Steuerungsvorrichtung nach Anspruch 1, wobei der Stromfolger (2) einen Motor (21) und einen elektrischen Generator (22) umfasst.

3. Steuerungsvorrichtung nach Anspruch 1, wobei das Aktivierungsgerät (4) in einer für die Bedienung durch einen Fahrer bequemen Position in einer Fahrzeugmittelkonsole angeordnet ist.

4. Steuerungsvorrichtung nach einem der Ansprüche 1 bis 3, wobei das Aktivierungsgerät (4) einen inaktiven Zustand und einen aktiven Zustand umfasst und wobei im inaktiven Zustand der zweite vorbestimmte Wert eine elektrische Menge ist, wenn sich der Leistungsakku in einem vollständig geladenen Zustand befindet; und wobei im aktiven Zustand der zweite vorbestimmte Wert durch manuelle Steuerung gemäß den Anforderungen eines Fahrers erhalten wird.

5. Steuerungsvorrichtung nach Anspruch 4, wobei im inaktiven Zustand der zweite vorbestimmte Wert 82 - 100 % beträgt.

6. Steuerungsvorrichtung nach Anspruch 4, wobei im aktiven Zustand der zweite vorbestimmte Wert 25 - 82 % beträgt.

7. Steuerungsvorrichtung nach Anspruch 1, wobei der erste vorbestimmte Wert 18-24 % beträgt.

8. Steuerungsvorrichtung nach Anspruch 1, wobei der Fahrmodus ferner einen dritten Fahrmodus umfasst, in dem der Leistungsakku (1) und der Stromfolger (2) gleichzeitig elektrische Leistung zum Antreiben des Fahrmotors (5) ausgeben;
wobei die Steuerung (3) konfiguriert ist, um: den dritten Fahrmodus auszuwählen, wenn der erste Fahrmodus oder der zweite Fahrmodus die momentane Leistungsanforderung des Elektrofahrzeugs nicht erfüllen, und entsprechend in den ursprünglichen ersten Fahrmodus bzw. zweiten Fahrmodus zurückzukehren, wenn die momentane Leistungsanforderung des Elektrofahrzeugs zurückfällt.

9. Steuerungsverfahren für einen Stromfolger (2) und einen Leistungsakku (1) für ein Elektrofahrzeug, wobei das Steuerungsverfahren die folgenden Schritte umfasst:
Ausgeben von elektrischer Leistung zum Antreiben eines Fahrmotors (5) des Elektrofahrzeugs durch Verwenden eines Leistungsakkus (1);
Ausgeben von elektrischer Leistung zum Antreiben des Fahrmotors (5) des Elektrofahrzeugs und/oder Laden des Leistungsakkus (1) durch Verwenden eines Stromfolgers (2);
Steuern der Fahrmodi des Leistungsakkus (1) und des Stromfolgers (2) anhand einer Steuerung (3), wobei die Steuerung (3) konfiguriert ist, um: wenn die verbleibende elektrische Menge (soc) des Leistungsakkus (1) nicht größer als ein erster vorbestimmter Wert ist, einen zweiten Fahrmodus auszuwählen, bis die verbleibende elektrische Menge (soc) des Leistungsakkus (1) auf einen zweiten vorbestimmten Wert ansteigt; wenn die verbleibende elektrische Menge (soc) des Leistungsakkus (1) nicht kleiner als der zweite vorbestimmte Wert ist, einen ersten Fahrmodus auszuwählen, bis die verbleibende elektrische Menge (soc) des Leistungsakkus (1) nicht größer als der erste vorbestimmte Wert ist; und abwechselnd zwischen dem ersten Fahrmodus und dem zweiten Fahrmodus hin- und herzuschalten, wobei der zweite vorbestimmte Wert größer als der erste vorbestimmte Wert ist; und wobei der erste Fahrmodus darin besteht, dass der Leistungsakku (1) allein arbeitet, um elektrische Leistung zum Antreiben des Fahrmotors (5) auszugeben; und wobei der zweite Fahrmodus darin besteht, dass der Stromfolger (2) allein arbeitet, um elektrische Leistung zum Antreiben des Fahrmotors (5) und zum Laden des Leistungsakkus (1) auszugeben; und
manuelles Steuern des numerischen Werts des zweiten vorbestimmten Werts mit Hilfe eines Aktivierungsgeräts (4) gemäß den Anforderungen eines Fahrers, um die Lademenge des Leistungsakkus (1) zu steuern.

10. Steuerungsverfahren nach Anspruch 9, wobei der Fahrmodus ferner einen dritten Fahrmodus umfasst, in dem der Leistungsakku (1) und der Stromfolger (2) gleichzeitig elektrische Leistung zum Antreiben des Fahrmotors (5) ausgeben;
wobei die Steuerung (3) konfiguriert ist, um: den dritten Fahrmodus auszuwählen, wenn der erste Fahrmodus oder der zweite Fahrmodus die momentane Leistungsanforderung des Elektrofahrzeugs nicht erfüllen, und entsprechend in den ursprünglichen ersten Fahrmodus bzw. zweiten Fahrmodus zurückzukehren, wenn die momentane Leistungsanforderung des Elektrofahrzeugs zurückfällt.

## Revendications

1. Dispositif de commande pour un suiveur de puissance (2) et une batterie d'alimentation (1) pour un véhicule électrique, le dispositif de commande comprenant :
une batterie d'alimentation (1) utilisée pour sortir une puissance électrique afin d'entraîner un moteur de traction (5) du véhicule électrique ;
un suiveur de puissance (2) utilisé pour sortir une puissance électrique afin d'entraîner le moteur de traction (5) et/ou charger la batterie d'alimentation (1) ;
un moyen de commande (3) utilisé pour commander les modes d'entraînement de la batterie d'alimentation (1) et du suiveur de puissance (2), le moyen de commande (3) étant configuré pour : sélectionner, lorsque la quantité électrique restante (soc, *state of charge)* de la batterie d'alimentation (1) n'est pas supérieure à une première valeur prédéterminée, un deuxième mode d'entraînement jusqu'à ce que la quantité électrique restante (soc) de la batterie d'alimentation (1) augmente sur une seconde valeur prédéterminée ; sélectionner, lorsque la quantité électrique restante (soc) de la batterie d'alimentation n'est pas inférieure à la seconde valeur prédéterminée, un premier mode d'entraînement jusqu'à ce que la quantité électrique restante (soc) de la batterie d'alimentation (1) ne soit pas supérieure à la première valeur prédéterminée ; et commuter de manière alternée entre le premier mode d'entraînement et le deuxième mode d'entraînement, la seconde valeur prédéterminée étant supérieure à la première valeur prédéterminée ; et
un appareil d'activation (4) utilisé pour commander manuellement la valeur numérique de la seconde valeur prédéterminée selon l'exigence d'un conducteur ;
dans lequel le premier mode d'entraînement est celui où la batterie d'alimentation (1) fonctionne seule pour sortir la puissance électrique afin d'entraîner le moteur de traction (5) ; et le deuxième mode d'entraînement est celui où le suiveur de puissance (2) fonctionne seul pour sortir la puissance électrique afin d'entraîner le moteur de traction (5) et de charger la batterie d'alimentation (1).

2. Dispositif de commande selon la revendication 1, dans lequel le suiveur de puissance (2) comprend un moteur (21) et un générateur électrique (22).

3. Dispositif de commande selon la revendication 1, dans lequel l'appareil d'activation (4) est disposé au niveau d'une position dans une console centrale de véhicule, laquelle position est pratique pour un fonctionnement par le conducteur.

4. Dispositif de commande selon une quelconque des revendications 1 à 3, dans lequel l'appareil d'activation (4) comprend un état inactif et un état actif ; et dans lequel, dans l'état inactif, la seconde valeur prédéterminée est une quantité électrique lorsque la batterie d'alimentation est dans un état entièrement chargé ; et dans l'état actif, la seconde valeur prédéterminée est obtenue par une commande manuelle selon l'exigence d'un conducteur.

5. Dispositif de commande selon la revendication 4, dans lequel, dans l'état inactif, la seconde valeur prédéterminée est 82 à 100 %.

6. Dispositif de commande selon la revendication 4, dans lequel, dans l'état actif, la seconde valeur prédéterminée est 25 à 82 %.

7. Dispositif de commande selon la revendication 1, dans lequel la première valeur prédéterminée est 18 à 24 %.

8. Dispositif de commande selon la revendication 1, dans lequel le mode d'entraînement comprend en outre un troisième mode d'entraînement dans lequel la batterie d'alimentation (1) et le suiveur de puissance (2) sortent de manière simultanée une puissance électrique pour entraîner le moteur de traction (5) ;
dans lequel le moyen de commande (3) est configuré pour : sélectionner le troisième mode d'entraînement lorsque le premier mode d'entraînement ou le deuxième mode d'entraînement ne répond pas à la demande de puissance instantanée du véhicule électrique, et de manière correspondante retourner vers le premier mode d'entraînement ou deuxième mode d'entraînement original lorsque la demande de puissance instantanée du véhicule électrique recule.

9. Procédé de commande pour un suiveur de puissance (2) et une batterie d'alimentation (1) pour un véhicule électrique, le procédé de commande comprenant les étapes suivantes : sortir une puissance électrique pour entraîner un moteur de traction (5) du véhicule électrique en utilisant une batterie d'alimentation (1) ;
sortir une puissance électrique pour entraîner le moteur de traction (5) du véhicule électrique et/ou charger la batterie d'alimentation (1) en utilisant un suiveur de puissance (2) ;
commander les modes d'entraînement de la batterie d'alimentation (1) et du suiveur de puissance (2) à l'aide d'un moyen de commande (3), dans lequel le moyen de commande (3) est configuré pour : sélectionner, lorsque la quantité électrique restante (soc) de la batterie d'alimentation (1) n'est pas supérieure à une première valeur prédéterminée, un deuxième mode d'entraînement jusqu'à ce que la quantité électrique restante (soc) de la batterie d'alimentation (1) augmente sur une seconde valeur prédéterminée ; sélectionner, lorsque la quantité électrique restante (soc) de la batterie d'alimentation (1) n'est pas inférieure à la seconde valeur prédéterminée, un premier mode d'entraînement jusqu'à ce que la quantité électrique restante (soc) de la batterie d'alimentation (1) ne soit pas supérieure à la première valeur prédéterminée ; et commuter de manière alternée entre le premier mode d'entraînement et le deuxième mode d'entraînement, la seconde valeur prédéterminée étant supérieure à la première valeur prédéterminée ; et dans lequel le premier mode d'entraînement est celui où la batterie d'alimentation (1) fonctionne seule pour sortir la puissance électrique afin d'entraîner le moteur de traction (5) ; et le deuxième mode d'entraînement est celui où le suiveur de puissance (2) fonctionne seul pour sortir la puissance électrique afin d'entraîner le moteur de traction (5) et de charger la batterie d'alimentation (1) ; et
commander manuellement la valeur numérique de la seconde valeur prédéterminée à l'aide d'un appareil d'activation (4) selon l'exigence d'un conducteur pour commander la quantité de charge de la batterie d'alimentation (1).

10. Procédé de commande selon la revendication 9, dans lequel le mode d'entraînement comprend en outre un troisième mode d'entraînement dans lequel la batterie d'alimentation (1) et le suiveur de puissance (2) sortent de manière simultanée une puissance électrique pour entraîner le moteur de traction (5) ;
dans lequel le moyen de commande (3) est configuré pour : sélectionner le troisième mode d'entraînement lorsque le premier mode d'entraînement ou le deuxième mode d'entraînement ne répond pas à la demande de puissance instantanée du véhicule électrique, et de manière correspondante retourner vers le premier mode d'entraînement ou deuxième mode d'entraînement original lorsque la demande de puissance instantanée du véhicule électrique recule.
